# EUROPÄISCHE PATENTANMELDUNG

(11) **EP 1 529 821 A2**
(43) Veröffentlichungstag der Anmeldung: **11.05.2005**
(21) Anmeldenummer: 04023984.0
(22) Anmeldetag: 08.10.2004
(51) Int. Cl.: C09D 17/00, C09D 7/02, C09B 67/00

(54) **Dispergiermittel zur Herstellung wässriger Pigmentpasten**

(30) Priorität: 21.10.2003 DE 10348825
(71) Anmelder: Goldschmidt GmbH, 45127 Essen (DE)
(72) Erfinder: Esselborn, Jutta, 45147 Essen (DE); Favresse, Philippe, Dr., 63755 Alzenau (DE); Lehmann, Kathrin, 51377 Leverkusen (DE); Linke, Ute, 45525 Hattingen (DE); Rüttgerodt, Angela, 51069 Köln (DE); Silber, Stefan, Dr., 47804 Krefeld (DE)

(57) **Zusammenfassung**

Die Erfindung betrifft die Verwendung von Copolymeren mit styroloxydbasierten vinylfunktionalisierten Polyethern zur Herstellung wässriger Pigmentpräparationen.

## Beschreibung

Die Erfindung betrifft die Verwendung von Copolymeren mit vinylfunktionalisierten und styroloxidbasierten Polyethern zur Herstellung wässriger Pigmentpräparationen.

Um die Dispergierung von Feststoffen in flüssigen Medien zu erleichtern und zu verbessern, werden üblicherweise Dispergiermittel eingesetzt, die als oberflächenaktive Mittel die Benetzung der zu dispergierenden Feststoffteilchen fördern und das Aufbrechen von Agglomeraten erleichtern. Diese Dispergiermittel wirken auch stabilisierend auf die erhaltenen Dispersionen und verhindern eine Reagglomerisation oder Flockung der Feststoffteilchen. Von besonderer Bedeutung sind Dispergiermittel beispielsweise für die Dispergierung von Pigmenten bei der Herstellung von Druckfarben, Anstrichstoffen und Lacken.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muss die einmal erreichte Verteilung stabilisiert werden. Während der Herstellung und Verarbeitung von wässrigen Pigmentpasten und deren späteren Verwendung zur Formulierung von Lacken und Farben können zahlreiche Probleme auftreten:
- Hohe Viskositäten von Farbpasten, Farben und Lacken
- Sedimentbildung
- Vertikales Ausschwimmen von Pigmenten (flooding)
- Horizontales Ausschwimmen von Pigmenten (floating)
- Geringer Glanzgrad
- Geringes Deckvermögen
- Unzureichende Transparenz
- Ungenügende Farbstärke
- Schlecht reproduzierbare Farbtöne, Farbtonwanderung
- Zu hohe Ablaufneigung von Lacken.

Es fehlte daher nicht an Versuchen, wirksame Dispergieradditive für Feststoffe, insbesondere Pigmente zur Verfügung zu stellen. So werden beispielsweise wasserlösliche, hydrophile Polyetherketten aufweisende Polyisocyanat-Additionsprodukte (EP-A-0 731 148), saure Poly(meth)acrylate (US-A 3 980 602, WO-A-94/21701), Phosphatester von Polyalkylenoxid-blockpolyestern (WO-A-97/19948), Aminoxide (DE-A-199 04 603) oder alternierende Copolymere aus Vinylmonomeren und Dicarbonsäurediestern (insbesondere Copolymere auf Basis von Maleinsäurederivaten und Vinylmonomeren) zu diesem Zweck beschrieben (WO-A-96/14347, EP-A-0 791 024).

Jedoch sind mit dem Einsatz solcher Produkte auch eine Vielzahl von Nachteilen verbunden. So sind häufig hohe Gehalte an Dispergieradditiven erforderlich, die erreichbaren Pigmentierungshöhen der Pasten sind unbefriedigend niedrig oder die Stabilität der Pasten und damit deren Viskositätskonstanz unzureichend. Flockulation und Aggregation lassen sich nicht immer vermeiden. Insbesondere die Dispergierung hydrophober organischer Pigmente ist in vielen Fällen problematisch. Vielfach mangelt es an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit oder Lichtbeständigkeit von Beschichtungen negativ beeinflusst und der bei der Herstellung und Verarbeitung entstehende, unerwünschte Schaum zusätzlich stabilisiert. Auch wird - bedingt durch mangelnde Verträglichkeit der Dispergieradditive in vielen Auflackbindemitteln - vielfach in unerwünschter Weise der Glanz beeinträchtigt, d.h. erniedrigt.

Der vorliegenden Erfindung liegt daher die Aufgabe zugrunde, für die Dispergierung von Pigmenten eine Vielzahl der genannten Nachteile zu überwinden, wobei besonders die Lagerstabilität der Pigmentkonzentrate im Hinblick auf rheologisches Verhalten, Flockulation, Aggregation sowie Farbtonwanderung durch Hydrolysebeständigkeit der eingesetzten Wirkstoffe sowie die Wetterfestigkeit und Vergilbungsstabilität daraus hergestellter Beschichtungen positiv beeinflusst und durch den Einsatz der Dispergieradditive keine flüchtigen organischen Anteile in die Formulierungen eingebracht werden sollten.

Weiterhin ist die Aufgabenstellung bisher weitestgehend ungelöst, bindemittel- und colöser- oder VOC-freie anorganische und organische Pigmentkonzentrate mit polymeren Netz- und Dispergieradditiven (also unter Vermeidung oberflächenaktiver Substanzen wie Alkylphenolalkoxylaten mit kritischen ökotoxikologischen Profilen) bei Erreichen hoher Pigmentgehalte herzustellen.

Überraschenderweise gelingt die Lösung dieser Aufgaben durch den Einsatz von Copolymeren mit ungesättigten Carbonsäurevorzugsweise Dicarbonsäure-Derivaten und polymerisierbaren styroloxidbasierten Oxyalkylenglykol- oder Polyalkylenoxidpolyether.

Dementsprechend besteht eine erste Ausführungsform der vorliegenden Erfindung in der Verwendung von Copolymeren auf Basis von styroloxidbasierten Oxyalkylenglykol- oder Polyalkylenoxid-Alkenylethern und ungesättigten Carbonsäure- vorzugsweise Dicarbonsäure-Derivaten als Dispergieradditive in Lacken und Druckfarben oder zur Herstellung wässriger Pigmentkonzentrate bestehend aus:
A) 1 bis 80 mol-% mindestens einer der Baugruppen der Formel Ia, Ib, Ic und/oder Id 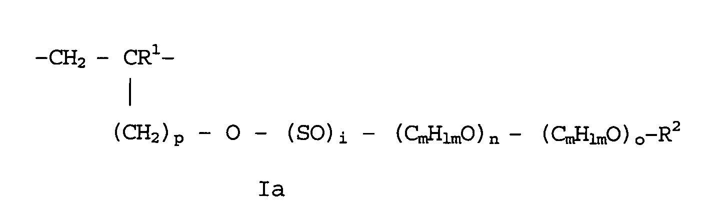 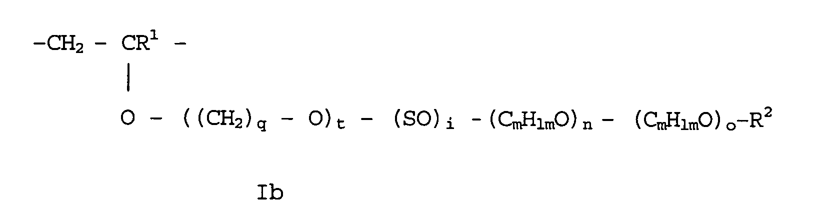 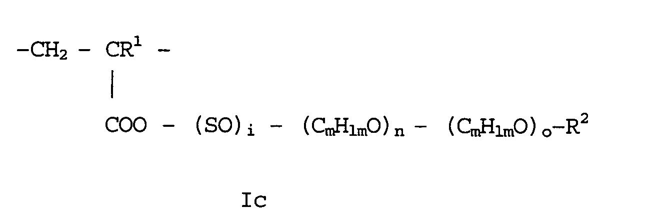 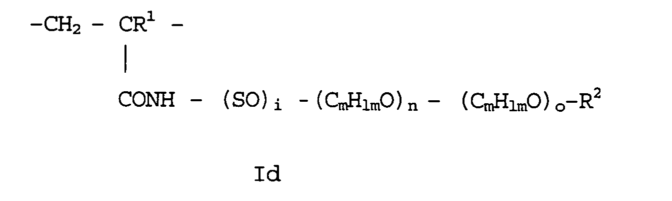 worin
   - R¹ =: H, aliphatischer Kohlenwasserstoffrest mit 1 bis 5 C-Atomen,
   - p =: 1 bis 4,
   - q =: 0 bis 6,
   - t =: 0 bis 4,
   - i =: 1 bis 6,
   - l =: 2 oder 1 wenn (CₘHₗₘO)ₒ = SO ist,
   - m =: unabhängig 2 bis 18
   sind,
   wobei der Index am H-Atom durch das Produkt aus 1 und m gebildet wird,
   - n =: 0 bis 100,
   - o =: 0 bis 100,
   worin die Summe (n + o) > 0 ist,
   - SO =: Styroloxid
   wobei
   - (SO) ᵢ: und die Alkylenoxidderivate statistisch oder blockartig im Polyether verteilt sein können, bevorzugterweise liegen die Gruppen aber blockartig aufgebaut und in der Reihenfolge

   - (SO)ᵢ - [(CₘHₗₘO)ₙ- (CₘHₗₘO)ₒ] - R²

   vor.
   - R² =: ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der gegebenenfalls substituiert ist oder ein Phosphorsäureester-, (vorzugsweise Monoester), Sulfat- oder Sulfonatderivat und vorzugsweise H sein kann, und
B) 1 bis 90 mol-% Baugruppen der Formel II 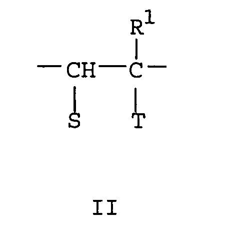 wobei
   - S =: -H, -COOMₐ, -COOR³ bedeutet,
   wobei
   - M =: Wasserstoff, ein- oder zweiwertiges Metallkation, Ammoniumion, organischer Aminrest,
   - a =: 1 oder für den Fall, dass M ein zweiwertiges Metallkation ½ ist,
   - R³ =: ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen ist,

   - T =: -U¹-R⁴ oder -U¹- (CₘHₗₘO) ₙ- (CₘHₗₘO) ₒ-R²,
   - U¹=: -COO-, -CONH-, -CONR³-, -O-, -CH₂O-,
   - R⁴ =: H, Mₐ, R³ oder -Q¹-NQ²Q³ ist,
   wobei
   - Q¹: ein zweiwertiger Alkylenrest mit 2 bis 24 Kohlenstoffatomen,
   - Q² und Q³ -: aliphatische und/oder alicyclische Alkylreste mit 1 bis 12 Kohlenstoffatomen sind, gegebenenfalls oxidiert zu

   Q¹ -N⁽⁺⁾O⁽⁻⁾Q²Q³
   und
   m, n, l, o, R¹ und R² die oben genannte Bedeutung aufweisen, und
C) 0 bis 10 mol-% Baugruppen der Formel III 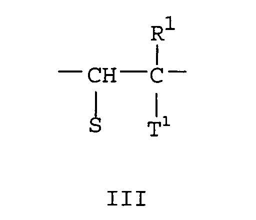
wobei
- T¹ =: -U¹- (CₘHₗₘO)ₙ- (GₘHₗₘO)ₒ-R⁵ bedeutet,
- R⁵ =: R⁴ oder 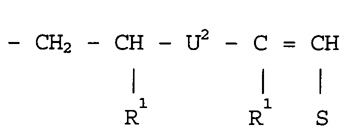 wobei
U² = -OOC -, -NHOC-, -O-, -O-CH₂- ist, wobei
m, n, l, o, S, R¹, R² und U¹ die oben genannte Bedeutung aufweisen.

Die Copolymer-Verbindungen entsprechend der vorliegenden Erfindung bestehen aus mindestens zwei von den drei Baugruppen A), B) und C) . Die erste Baugruppe A) entspricht der Formel Ia, Ib, Ic und/oder Id 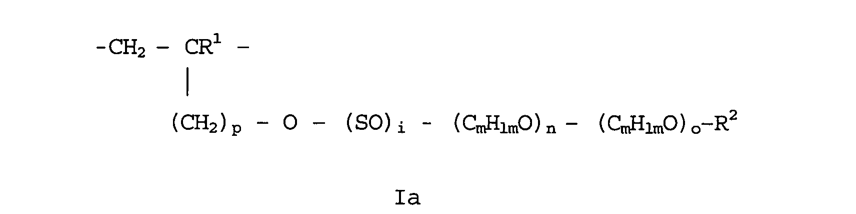 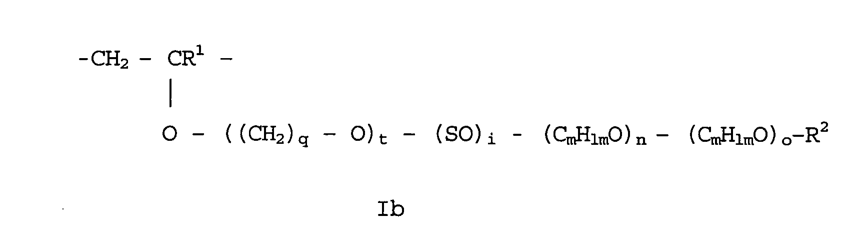 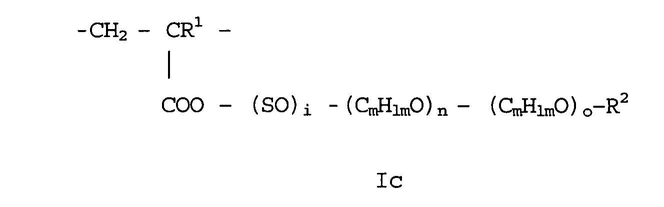 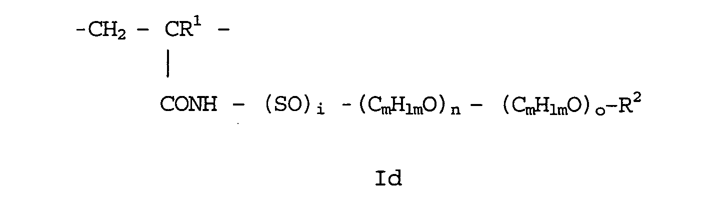 die sich von den polymerisierbaren styroloxidbasierten Oxyalkylenglykol- oder Polyalkylenoxid-Polyethern ableiten und worin
- R¹: Wasserstoff, ein aliphatischer Kohlenwasserstoffrest mit 1 bis 5 C-Atomen (der ebenfalls linear oder verzweigt bzw. auch ungesättigt sein kann) und
- R²: ein aliphatischer Kohlenwasserstoffrest mit 1 bis 20 C-Atomen (der ebenfalls linear oder verzweigt bzw. auch ungesättigt sein kann) oder ein Phosphat-, vorzugsweise aber Monoesterphosphat, Sulfat- oder Sulfonatderivat und vorzugsweise H sein kann,
- p: Werte zwischen 1 und 4 annehmen kann und
- q =: 0 bis 6,
- t =: 0 bis 4,
- i =: 1 bis 6,
- l =: 2 oder 1 wenn (CₘHₗₘO)ₒ = SO ist,
- m =: unabhängig 2 bis 18,
- n =: 0 bis 100,
- o =: 0 bis 100,
worin die Summe (n + o) > 0 ist
sein kann.

Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Gemäß einer bevorzugten Ausführungsform bedeuten in Formel Ib t = 0, i = 3, l = 2, m = 2, n = 20, o = 0 und R¹ = H so dass es sich um eine Baugruppe handelt, die sich vom Polystyroloxid, Polyethylenoxid-Vinylether ableitet.

Wobei (SO)ᵢ und die Alkylenoxidderivate statistisch oder blockartig im Polyether verteilt sein können, bevorzugterweise liegen die Gruppen aber blockartig aufgebaut und in der Reihenfolge - (SO)ᵢ - [ (CₘHₗₘO)ₙ- (CₘHₗₘO)ₒ] - R² vor.

Die zweite Baugruppe B) entspricht der Formel II

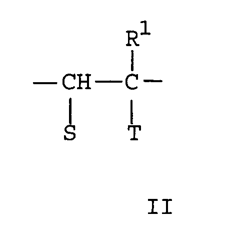

In Formel II kann R¹ = H oder CH₃ sein, je nachdem ob es sich um Acryl- oder Methacrylsäure-Derivate handelt. S kann hierbei -H, COOMₐ oder -COOR³ bedeuten, wobei M = Wasserstoff, ein ein- oder zweiwertiges Metallkation, Ammoniumion, ein organischer Aminrest mit a = 1, oder für den Fall, dass es sich bei M um ein zweiwertiges Kation handelt, a = ½ ist. Es ergibt sich dann zusammen mit einer weiteren ebenfalls Mₐ enthaltenden Gruppierung (mit a = ½), eine Verbrückung über M.

Als ein- oder zweiwertiges Metallkation finden vorzugsweise Natrium-, Kalium-, Calcium-, oder Magnesiumionen Verwendung.

Als organische Aminreste werden vorzugsweise substituierte Ammoniumgruppen eingesetzt, die sich ableiten von primären, sekundären oder tertiären C₁-C₂₀-Alkylaminen, C₁-C₂₀-Alkanolaminen, C₅-C₈-Cycloalkylaminen und C₆-C₁₄-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin, Diphenylamin in der protonierten (Ammonium-)Form, Dimethylaminoethanol, 2-Amino-2-Methyl-1-Propanol.

R³ bedeutet ein aliphatischer Kohlenwasserstoffrest mit 1 bis 20 C-Atomen, bevorzugterweise mit 1 bis 6 C-Atomen, ein cycloaliphatischer Kohlenwasserstoffrest mit 5 bis 8 C-Atomen oder ein Arylrest mit 6 bis 14 C-Atomen, der ggf. noch substituiert sein kann. Der aliphatische Kohlenwasserstoffrest kann ebenfalls linear oder verzweigt sein. Die bevorzugten cycloaliphatischen Kohlenwasserstoffreste sind wiederum Cyclopentyl- oder Cyclohexylreste und die bevorzugten Arylreste Phenyl- oder Naphthylreste, die insbesondere noch durch Hydroxy-, Carboxyl- oder Sulfonsäuregruppen substituiert sein können. Im Falle von T = -COOR³ ist S = COOMₐ oder -COOR³. Für den Fall, dass T und S = COOR³ sind, leiten sich die entsprechenden Baugruppen von den Dicarbonsäureestern ab.

Neben diesen Esterstruktureinheiten können die Baugruppen B) noch andere hydrophobe Strukturelemente besitzen. Hierzu gehören die Polyalkylenoxid-Derivate mit:

T = -U¹ - (CₘHₗₘO)ₙ - (CₘHₗₘO)ₒ - R²

wobei
- l =: 2 oder 1 wenn (CₘHₗₘO)ₒ = SO ist,
- m =: unabhängig 2 bis 18,
- n =: 0 bis 100,
- o =: 0 bis 100,
worin die Summe (n + o) > 0 ist
bedeuten.

Die Polyalkylenoxid-Derivate können hierbei über eine Gruppierung U¹ mit dem Ethylrest der Baugruppe B) entsprechend Formel II verknüpft sein, wobei
U¹ = -COO-, -CONH-, -CONR³-, -O- oder -CH₂-O- sein kann. Hierbei handelt es sich um die entsprechenden (Meth)acrylate, Amid-, Vinyl- oder Allylether der Baugruppen entsprechend Formel II.

Als Carbonsäure oder Dicarbonsäure-Derivate entsprechend der Formel II können auch Umsetzungsprodukte mit Diaminen aus der Gruppe -Q¹-NQ²Q³, wobei Q¹ ein zweiwertiger Alkylenrest mit 2 bis 24 Kohlenstoffatomen, Q² und Q³ gleiche oder verschiedene, aliphatische und/oder alicyclische Alkylreste mit 1 bis 12 Kohlenstoffatomen sind, eingesetzt werden, die unter Ausbildung von über Halbamid- oder Imidgruppen gebundenen Aminoxidgruppen oxidiert wurden.

Die dritte Baugruppe C) entspricht der Formel III

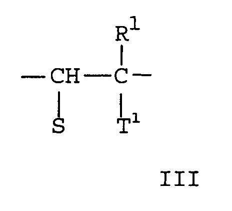

In der Formel III kann R¹ = H oder CH₃ sein, je nachdem ob es sich um Acryl- oder Methacrylsäure-Derivate handelt. S kann hierbei -H, COOMₐ oder -COOR³ bedeuten, wobei a und M die oben erwähnte Bedeutung besitzen und R³ ein aliphatischer Kohlenwasserstoffrest mit 1 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T¹ = -COOR³ ist S = -COOMₐ oder -COOR³. Für den Fall, dass T¹ und S = -COOR³ sind, leiten sich die entsprechenden Baugruppen von den Dicarbonsäureestern ab.

Neben diesen Esterstruktureinheiten können die Baugruppen C) noch andere hydrophobe Strukturelemente besitzen. Hierzu gehören die Polyalkylenoxid-Derivate mit:

T¹ = -U¹ - (CₘHₗₘO)ₙ- (CₘHₗₘO)ₒ - R⁵

wobei
- 1 =: 2 oder 1 wenn (CₘHₗₘO)ₒ = SO ist,
- m =: unabhängig 2 bis 18,
- n =: 0 bis 100,
- o =: 0 bis 100,
worin die Summe (n + o) > 0 ist
bedeuten.

Die Polyalkylenoxid-Derivate können hierbei über eine Gruppierung U¹ mit dem Ethylrest der Baugruppe C) entsprechend Formel III verknüpft sein, wobei
U¹ = -COO-, -CONH-, -CONR³-, -O- oder -CH₂-O- sein kann. Hierbei handelt es sich um die entsprechenden (Meth)acrylate, Amid-, Vinyl- oder Allylether der Baugruppen entsprechend Formel III.
- R⁵: kann hierbei wiederum 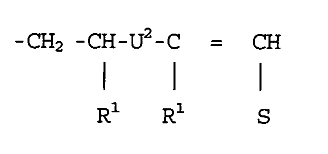
sein, wobei
- U²: -OOC-, -NHOC-, -O- oder -OCH₂- bedeuten kann und
- s: die oben beschriebene Bedeutung besitzt. Diese Verbindungen stellen Polyalkylenoxid-Derivate der bifunktionellen Alkenylverbindungen entsprechend Formel III dar.

Besonders bevorzugt im Sinne der vorliegenden Erfindung ist die Verwendung zur Herstellung wässriger oder colöserhaltiger Pigmentkonzentrate, wobei man die Copolymere in Mengen von 0,1 bis 200 Gew.-%, insbesondere bis 100 Gew.-%, bezogen auf das Pigment einsetzt.

Es ist erfindungsgemäß bevorzugt, wenn die Copolymere aus 1 bis 80 mol-% Baugruppen der Formel Ia, Ib, Ic und/oder Id, 1 bis 90 mol-% Baugruppen der Formel II und 0 bis 10 mol-% Baugruppen der Formel III bestehen. Besonders bevorzugt bestehen die Copolymere aus 10 bis 60 mol-% Baugruppen der Formel Ia, Ib, Ic und/oder Id, 40 bis 90 mol-% Baugruppen der Formel II und 0 bis 2 mol-% Baugruppen der Formal III. Gemäß einer bevorzugten Ausführungsform enthalten die erfindungsgemäßen Copolymere zusätzlich noch bis zu 50 mol-%, insbesondere bis zu 20 mol-%, bezogen auf die Summe der Baugruppen A), B) und C) solche Baugruppen, deren Monomer ein Vinyl-, Acrylsäure- oder Methacrylsäure-Derivat darstellt.

Vorzugsweise leiten sich die monomeren Vinylderivate von einer Verbindung ab, die ausgewählt ist aus der Gruppe Styrol, Ethylen, Propylen, Isobuten oder Vinylacetat. Als bevorzugtes monomeres Acrylsäurederivat leiten sich die zusätzlichen Baugruppen insbesondere von Acrylsäure, Methylacrylat oder Butylacrylat ab. Als bevorzugtes monomeres Methacrylsäure-Derivat ist Methacrylsäure, Methylmethacrylat, Butylmethacrylat und Hydroxyethylmethacrylat anzusehen.

Ein besonderer Vorteil der erfindungsgemäß eingesetzten Copolymere besteht darin, dass man die Stoffmengen-Anteile der Struktureinheiten A) bis C) derart einstellen kann, dass bei den entsprechenden Copolymeren ein ausgewogenes Verhältnis von polaren zu unpolaren Gruppierungen resultiert, wodurch eine gezielte Kontrolle der oberflächenaktiven Eigenschaften der entsprechenden Produkte möglich ist.

Die Anzahl der sich wiederholenden Strukturelemente ist nicht eingeschränkt, doch hat es sich als besonders vorteilhaft erwiesen, die Anzahl der Strukturelemente so einzustellen, dass die Copolymere eine mittlere Molekularmasse von 150 bis 2.000.000 aufweisen, wobei sich die gewünschte Molekularmasse in erster Linie nach dem Anwendungsgebiet richtet.
Üblicherweise weisen die Polymere im unteren Molmassenbereiche Werte von ca. 1.000 bis ca. 5.000 und im oberen Molmassenbereich Werte von ca. 20.000 bis ca. 50.000 auf.

Die erste erfindungsgemäße Komponente zur Herstellung der erfindungsgemäßen Copolymeren stellt einen polymerisierbaren styroloxydbasierten Oxyalkylenglykolether oder Polyalkylenoxidether dar, der in einer Menge von 1 bis 80 mol-%, vorzugsweise 10 bis 60 mol-% eingesetzt wird. Bei den bevorzugten polymerisierbaren styroloxydbasierten Oxyalkylenglykolethern oder Polyalkylenoxidethern entsprechend den Formeln Ia, Ib, Ic und/oder Id 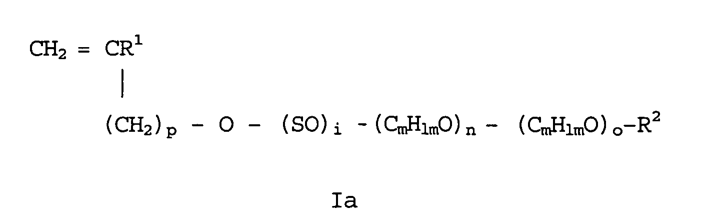 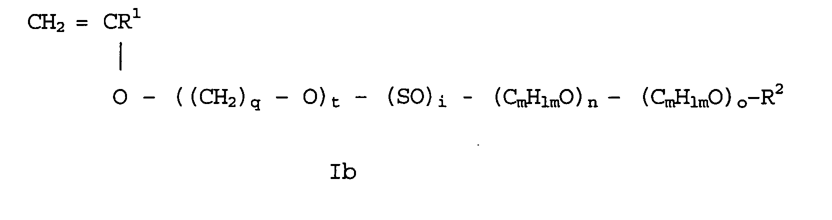 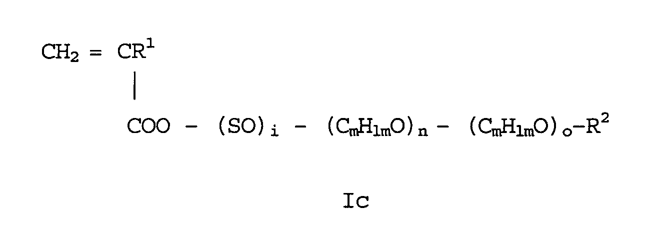 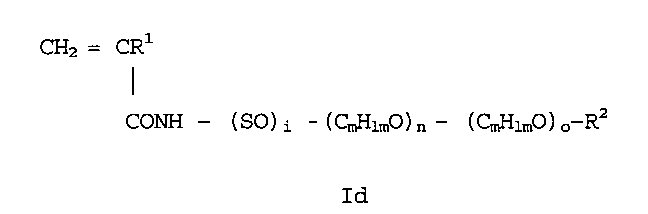 bedeuten
- R¹: Wasserstoff oder ein aliphatischer Kohlenwasserstoffrest mit 1 bis 5 C-Atomen (der ebenfalls linear oder verzweigt bzw. auch ungesättigt sein kann),
- p: Werte zwischen 1 und 4 annehmen kann,
- q: 0 bis 6,
- t: 0 bis 4
wobei
- R²: ein aliphatischer Kohlenwasserstoffrest mit 1 bis 20 C-Atomen (linear oder verzweigt sowie gesättigt oder auch ungesättigt), bevorzugterweise 1 bis 6 C-Atomen, ein cycloaliphatischer Kohlenwasserstoff mit 5 bis 8 C-Atomen, ein Arylrest mit 6 bis 14 C-Atomen, der gegebenenfalls substituiert oder ein Phosphorsäureester-, bevorzugterweise Monophosphatester, Sulfat- oder Sulfonatderivat und vorzugsweise H,
- i = 1: bis 6,
- l = 2: oder 1 wenn (CₘHₗₘO)ₒ = SO ist,
- m =: unabhängig 2 bis 18,
- n =: 0 bis 100,
- o =: 0 bis 100,
worin die Summe (n + o) > 0 ist
sein kann.

Gemäß einer bevorzugten Ausführungsform bedeuten in Formel Ib:
- t =: 0,
- i =: 3,
- l =: 2,
- m =: 2,
- n =: 20,
- o =: 0,
so dass es sich um Baugruppen handelt, die sich vom Polystyroloxid und Polyethylenoxid-Vinylether ableiten.

Wobei (SO)ᵢ und die Alkylenoxidderivate statistisch oder blockartig im Polyether verteilt sein können, bevorzugterweise liegen die Gruppen aber blockartig aufgebaut und in der Reihenfolge - (SO)ᵢ - [(CₘHₗₘO)ₙ- (CₘHₗₘO)ₒ] - R² vor.

Als zweite erfindungswesentliche Komponente zur Einführung der Baugruppen B) wird vorzugsweise 40 bis 90 mol-% einer vinylischen Polyalkylenglykol-, Polyalkylenoxid-Verbindung eingesetzt. Als vinylische Polyalkylenglykol-Verbindung oder Polyalkylenoxid-Verbindung werden Derivate entsprechend der Formel IV verwendet, 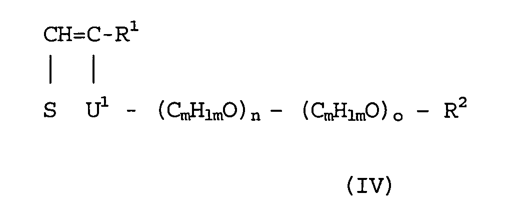 wobei
- S =: vorzugsweise - H oder COOMₐ und U¹ = -COO-, -CONH-, -CONR³-, -O- oder -CH₂O- sein können,
d. h. es handelt sich um die (Meth)acrylsäure, Säure-amid-, Vinyl- oder Allylether der entsprechenden Polyalkylenglykol- oder Polyalkylenoxid-Derivate. Die Werte sind für
- l =: 2 oder 1 wenn (CₘHₗₘO)ₒ = SO ist,
- m =: unabhängig 2 bis 18,
- n =: 0 bis 100,
- o =: 0 bis 100
worin die Summe (n + o) > 0 ist.

Mit R¹ handelt es sich um die Polyalkylenglykol- oder Polyalkylenoxid-Monoamide bzw. Ether der entsprechenden Acryl-(S = H, R¹ = H), Methyacryl- (S = H, R¹ = CH₃) oder Maleinsäure- (S = COOMₐ, R¹ = H) Derivate, Acrylate, Methacrylate und Acrylamide. Beispiele für solche Monomere sind Maleinsäure-N-(methylpolypropylenglykol-)monoamid, Maleinsäure-N-(methoxy-polypropylenglykol-polyethylenglykol-)monoamid, Polypropylenglykolvinylether und Polypropylenglykolallylether, Methylacrylat, Butylacrylat, Methylmethacrylat, Butylmethacrylat, Acrylamid und Dimethylpropylacrylamid.

Als ungesättigte Carbonsäurederivate, gemäß Formel II, werden vorzugsweise Maleinsäure, Maleinsäuremonoester, Maleinsäuremonoamide, Maleinsäureureide, oder Umsetzungsprodukte mit Diaminen, welche ggf. zu aminoxidgruppenhaltigen Derivaten oxidiert wurden, aber auch Fumarsäure eingesetzt. Bevorzugt werden Copolymere auf Basis von Maleinsäuremonoestern, Maleinsäuremonoamiden und -ureiden verwendet.

Anstelle der Maleinsäure oder Fumarsäure können auch deren ein- oder zweiwertige Metallsalze, vorzugsweise Natrium-, Kalium-, Calcium- oder Magnesiumsalze, deren Ammoniumsalze oder deren Salze mit einem organischen Aminrest verwendet werden.

Als Maleinsäuremonoester wird vor allem ein Esterderivat eingesetzt, dessen alkoholische Komponente ein Polyalkylenglykolderivat oder Polyalkylenoxidderivat der allgemeinen Formel HO-R¹ oder HO-(CₘHₗₘO)ₙ-(CₘHₗₘO)ₒ-R² ist.

R¹, l, m, n und o besitzen die oben genannte Bedeutung.

Die bevorzugten Substitutionen am Arylrest sind Hydroxyl-, Carboxyl- oder Sulfonsäuregruppen. Im Falle der Malein- oder Fumarsäuremonoamide sind die Reste R² der Gruppierung -NR²₂ mit R¹ identisch. Die ungesättigten Dicarbonsäurederivate werden vorzugsweise in einer Menge von 10 bis 60 mol-% verwendet.

Als dritte erfindungswesentliche Komponente zur Einführung der Baugruppen C) wird vorzugsweise 0 bis 2 mol-% einer vinylischen Polyalkylenglykol-, Polyalkylenoxid- oder EsterVerbindung eingesetzt. Als bevorzugte vinylische Polyalkylenglykol-Verbindung oder Polyalkylenoxid-Verbindung werden Derivate entsprechend der Formel V verwendet, 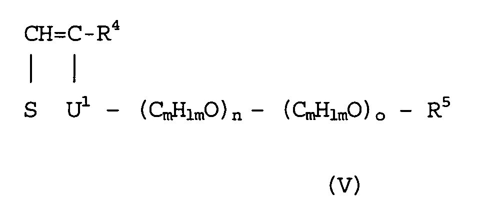 wobei
- S =: vorzugsweise -H oder -COOMₐ und
- U¹ =: -COO-, -CONH-, -CONR³-, -O- oder -CH₂O- sein können, d. h. es handelt sich um die (Meth)acrylsäure-, Säureamid-, Vinyl- oder Allylether der entsprechenden Polyalkylenglykol- oder Polyalkylenoxid-Derivate. Die Werte sind für
- l =: 2 oder 1 wenn (CₘHₗₘO)ₒ = SO ist,
- m =: unabhängig 2 bis 18,
- n =: 0 bis 100,
- o =: 0 bis 100
worin die Summe (n + o) > 0 ist.
R⁵ bedeutet, 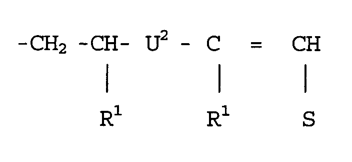 wobei
- U² =: -COO-, -NH-CO-, -O- sowie -OCH₂- und
- S =: -COOMₐ und vorzugsweise -H
ist.

R⁵ steht für bifunktionelle Vinylverbindungen, deren Polyalkylenglykol- oder Polyalkylenoxid-Derivate über Amid- oder Ethergruppen (-O- bzw. -OCH₂-) miteinander verbunden sind. Beispiele für solche Verbindungen sind Polypropylenglykolbis-maleinamidsäure, Polypropylenglykoldiacrylamid, Polypropylenglykoldimethacrylamid, Polypropylenglykoldivinylether, Polypropylenglykoldiallylether.

Die Molekularmassen der Verbindungen, welche die Baugruppe Id) bilden, können in weiten Grenzen variiert werden und liegen vorzugsweise zwischen 150 und 20.000.

Die wässrigen Zubereitungen der erfindungsgemäß eingesetzten Copolymeren weisen aufgrund des Wechsels von hydrophilen und hydrophoben Gruppen in der makromolekularen Struktur einen Trübungspunkt auf, der bevorzugt zwischen 20 und 98 °C liegt und vorzugsweise durch den Anteil des Strukturelements C) beliebig gesteuert werden kann.

Die Herstellung der erfindungsgemäß eingesetzten Copolymere kann auf verschiedenen Wegen erfolgen. Bevorzugt ist hierbei, dass man 10 bis 60 mol-% eines Oxyalkylenglykol-Alkylenethers oder Polyalkylenoxid-Alkenylethers, 40 bis 90 mol-% eines ungesättigten Dicarbonsäurederivats, Vinyl-, Acrylsäure- oder Methacrylsäure-Derivates und 0 bis 2 mol-% einer vinylischen Polyalkylenglykol- oder Polyalkylenoxid-Verbindung mit Hilfe eines radikalischen Starters polymerisiert.

Gemäß einer bevorzugten Ausführungsform werden noch bis zu 50 mol-%, insbesondere bis zu 20 mol-%, bezogen auf die Monomeren mit den Baugruppen gemäß den Formeln I, II und III, eines Vinyl-, Acrylsäure- oder Methacrylsäure-Derivates einpolymerisiert. Als monomeres Vinylderivat findet bevorzugt Styrol, Ethylen, Propylen, Isobuten oder Vinylacetat Verwendung, als monomeres Acrylsäurederivat wird bevorzugt Acrylsäure, Methylacrylat oder Butylacrylat eingesetzt, während als monomere Methacrylsäure-Derivate schließlich bevorzugt Methacrylsäure, Methylmethacrylat, Butylmethacrylat und Hydroxyethylmethacrylat herangezogen werden.

Die genannten Copolymere können mittels Verfahren, die Stand der Technik sind, hergestellt werden. Ein besonderer Vorteil besteht darin, dass man vorzugsweise ohne Lösemittel oder aber in wässriger Lösung arbeiten kann. In beiden Fällen handelt es sich um drucklose und daher sicherheitstechnisch unbedenkliche Reaktionen.

Wird das Verfahren in wässriger Lösung durchgeführt, so erfolgt die Polymerisation bei 20 bis 100 °C mit Hilfe eines üblichen Radikalstarters, wobei die Konzentration der wässrigen Lösung vorzugsweise auf 30 bis 60 Gew.-% eingestellt wird. Gemäß einer bevorzugten Ausführungsform kann die radikalische Polymerisation hierbei im sauren pH-Bereich durchgeführt werden, insbesondere bei einem pH-Wert zwischen 4,0 und 6,5, wobei auf die herkömmlichen Initiatoren wie H₂O₂ zurückgegriffen werden kann, ohne dass es zu einer befürchteten Etherspaltung kommt, wodurch die Ausbeute sehr stark beeinträchtigt würde.

Bei dem Verfahren wird vorzugsweise so gearbeitet, dass das ungesättigte Dicarbonsäure-Derivat in teilneutralisierter Form in wässriger Lösung, bevorzugt zusammen mit dem Polymerisationsinitiator, vorgelegt wird und die übrigen Monomere zudosiert werden, sobald die erforderliche Reaktionstemperatur in der Vorlage erreicht ist.

Separat zugegeben werden die Polymerisations-Hilfsmittel, welche die Aktivierungsschwelle des vorzugsweise peroxidischen Initiators senken können, so dass die Copolymerisation bei relativ niedrigen Temperaturen ablaufen kann. Gemäß einer weiteren bevorzugten Variante kann sowohl das ungesättigte Dicarbonsäure-Derivat als auch der Radikalbildner in separaten oder gemeinsamen Zuläufen der Reaktorvorlage zudosiert werden, wodurch das Problem der Wärmeabführung in idealer Weise gelöst werden kann.

Die Art der verwendeten Polymerisationsinitiatoren, -aktivatoren und sonstiger Hilfsmittel, wie z. B. Molekulargewichtsregler, ist relativ unproblematisch, d. h. als Initiatoren kommen die üblichen Radikalspender zum Einsatz, wie Wasserstoffperoxid, Natrium-, Kalium- oder Ammoniumperoxodisulfat, tert. Butylhydroperoxid, Dibenzoylperoxid, Natriumperoxid, 2,2'-Azobis-(2-amidino-propan)-dihydrochlorid, Azobis-(isobutyronitril) und andere. Kommen Redoxsysteme zum Einsatz, so werden oben genannte Initiatoren mit reduzierend wirkenden Aktivatoren kombiniert. Beispiel für derartige Reduktionsmittel sind Fe (II)-salze, Natriumhydroxymethansulfinat-Dihydrat, Alkalimetallsulfite und -metabisulfite, Natriumhypophosphit, Hydroxylaminhydrochlorid, Thioharnstoff und andere.

Ein besonderer Vorteil der Copolymeren liegt darin, dass sie auch ohne Lösemittel hergestellt werden können, was mit Hilfe der üblichen radikalischen Starter bei Temperaturen zwischen 60 und 150 °C erfolgen kann. Diese Variante kann aus wirtschaftlichen Gründen insbesondere dann angewendet werden, wenn die Copolymeren in wasserfreier Form direkt ihrer Verwendung zugeführt werden sollen, weil dann eine aufwendige Abtrennung des organischen Lösemittels oder auch des Wassers für eine eventuelle polymeranaloge Umsetzung entfallen kann.

Die erfindungsgemäß eingesetzten Copolymere sind besonders vorteilhaft zur Herstellung wässriger und lösemittelfreier Pigmentpräparationen, die gute Einarbeitung der Pigmente, vorteilhafte Rheologie-Profile, Sedimentverhinderung, hohe Farbstärke, hohe Homogenität und Flockulationsstabilität bei Pigmentmischungen, hohe Glanzgrade, hohes Deckvermögen (oder wenn gewünscht hohe Transparenz) sowie besonders herausragende Lagerstabilität der wässrigen Zubereitungen und Bewitterungsstabilität aufweisen.

Zur Herstellung wässriger Pigmentpasten werden insbesondere 0,1 bis 200 Gew.-% der Copolymere, vorzugsweise 0,5 bis 50 Gew.-% (bezogen auf das Gewicht der Pigmente), eingesetzt. Die Copolymere können entweder vorab mit den zu dispergierenden Pigmenten vermischt werden oder direkt in dem Dispergiermedium (Wasser, eventuelle Glycolether-Zusätze) vor oder gleichzeitig mit der Zugabe der Pigmente und etwaiger anderer Feststoffe gelöst werden.

Die vorliegende Erfindung betrifft weiterhin ein Verfahren zur Herstellung wässriger, hochkonzentrierter, pump- und fließfähiger Pigmentpräparationen, das dadurch gekennzeichnet ist, dass man das erfindungsgemäß zu verwendende styroloxidbasierte Polymer, gegebenenfalls in Kombination mit wenigstens einer weiteren Komponente, mit Wasser vermischt, in dieser Mischung das Pigment unter Rühren einstreut und bis zur Erzielung der gewünschten Feinheit und Konsistenz der Suspension dispergiert. Ein weiteres Verfahren zur Herstellung der erfindungsgemäßen Pigmentpräparationen besteht darin, ein Pigment mit den erfindungsgemäßen Copolymeren zunächst trocken zu vermischen, wobei daraus eine pulverförmige Pigmentzubereitung resultiert. Diese kann bei Bedarf in Wasser dispergiert werden, wobei die erfindungsgemäße Pigmentpräparation erhalten wird. Ein drittes erfindungsgemäßes Verfahren zur Herstellung wässriger, hochkonzentrierter, pump- und fließfähiger Pigmentsuspensionen und -pasten besteht darin, einen wässrigfeuchten Pigmentfilterkuchen mit dem Copolymer zu versetzen und beispielsweise mit einem Dissolver in den Pigmentfilterkuchen einzuarbeiten, wobei dieser sich verflüssigt.

Als Beispiele für zu dispergierende Pigmente seien genannt:
- Monoazopigmente:
   C.I. Pigment Brown 25;
   C.I. Pigment Orange 5, 36 und 67;
   C.I. Pigment Red 1, 2, 3, 48:4, 49, 52:2, 53, 57:1, 251, 112, 170 und 184;
   Solintor WF 57, Litholrubin 4 BA 57:1;
   C.I. Pigment Yellow 1, 3, 73, 74, 65, 97, 151 und 183;
- Diazopigmente:
   C.I. Pigment Orange 34;
   C.I. Pigment Red 144 und 166
   C.I. Pigment Yellow 12, 13, 17, 83, 113 und 126;
- Anthrachinonpigmente:
   C.I. Pigment Yellow 147 und 177;
   C.I. Pigment Violet 31;
- Anthrapyrimidinpigmente: C.I. Pigment Yellow 108;
- Chinacridonpigmente:
   C.I. Pigment Red 122, 202 und 20;
   C.I. Pigment Violet 19;
- Chinophthalonpigmente: C.I. Pigment Yellow 138;
- Dioxazinpigmente: C.I. Pigment Violet 23 und 27;
- Flavanthronpigmente: C.I. Pigment Yellow 24;
- Indanthronpigmente: C.I. Pigment Blue 60 und 64;
- Isoindolinpigmente:
   C.I. Pigment Orange 69;
   C.I. Pigment Red 260;
   C.I. Pigment Yellow 139;
- Isoindolinonpigmente:
   C.I. Pigment Orange 61;
   C.I. Pigment Red 257 und 260;
   C.I. Pigment Yellow 109, 110, 173 und 185;
- Metallkomplexpigmente: C.I. Pigment Yellow 117 und 153;
- Perinonpigmente: C.I. Pigment Orange 43;
   C.I. Pigment Orange 43;
   C.I. Pigment Red 194;
- Perylenpigmente:
   C.I. Pigment Black 31 und 32;
   C.I. Pigment Red 123, 149, 178, 179, 190 und 224;
   C.I. Pigment Violet 29;
- Phtalocyaninpigmente:
   C.I. Pigment Blue 15, 15:1, 15:2, 15:3, 15:4, 15:6 und 16;
   C.I. Pigment Green 7 und 36;
- Pyranthronpigmente:
   C.I. Pigment Orange 51;
   C.I. Pigment Red 216;
- Thioindigopigmente: C.I. Pigment Red 88;
- Triphenylmethan- pigmente:
   C.I. Pigment Blue 1, 61, und 62;
   C.I. Pigment Green 1;
   C.I. Pigment Red 81 und 169;
   C.I. Pigment Violet 2 und 3;
- C.I. Pigment Black 1 (Anilinschwarz)
- C.I.Pigment Yellow 101 (Aldazingelb)
- Anorganische Pigmente:
- Weißpigmente:
   Titandioxid (C.I. Pigment White 6), Zinkweiß, Farbenzinkoxid;
   Zinksulfid, Lithopone; Bleiweiß;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente:
   Chromoxid, Chromoxidhydratgrün;
   Chromgrün (C.I. Pigment Green 48);
   Cobaltgrün (C.I. Pigment Green 50); Ultramaringrün;
   Kobaltblau (C.I. Pigment Blue 28 und 36); Ultramarinblau; Eisenblau (C.I. Pigment Blue 27); Manganblau;
   Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31),
   Chromorange;
   Eisenoxidgelb (C.I. Pigment Yellow 42); Nickeltitangelb (C.I. Pigment Yellow 53; C.I. Pigment Yellow 157 und 164); Chromtitangelb, Cadmiumsulfid und Cadmiumzinksulfid,(C.I. Pigment Yellow 37 und 35); Chromgelb (C.I. Pigment Yellow 34), Zinkgelb, Erdalkalichromate, Neapelgelb, Bismutvanadat (C.I. Pigment Yellow 184);
- Glanzpigmente: Metalleffektpigmente auf Basis metalloxidbeschichteter Metallplättchen; Perglanzpigmente auf der Basis metalloxidbeschichteter Glimmerplättchen.

Die erfindungsgemäßen Verbindungen eignen sich darüber hinaus besonders für die Herstellung wässriger Rußpasten. Weiterhin können auch sogenannte "problematische" organische Pigmente mit Erfolg dispergiert werden. Unter prolematischen Pigmenten sind beispielsweise solche zu verstehen, deren Oberfläche hydrophobiert wurde wie beispielsweise durch Abietinsäureharze, Collophoniumharze, Polyester etc. (Diarylide Yellow Pigmente); organische/anorganische Mischpigmente wie z.B. Solintor® WF 57 und Litholrubin 4 BA.

Füllstoffe, die beispielsweise in wässrigen Lacken dispergiert werden können, sind z.B. solche auf Basis von Kaolin, Talkum, anderen Silicaten, Kreide, Glasfasern, Glasperlen oder Metallpulvern.

Als Lacksysteme, in denen die erfindungsgemäßen Pigmentpräparationen aufgelackt werden können, kommen beliebige wässrige 1K- oder 2K-Lacke in Betracht. Beispielhaft genannt seien wässrige 1K-Lacke, wie beispielsweise solche auf Basis von Alkyd-, Acrylat-, Epoxid-, Polyvinylacetat-, Polyester- oder Polyurethanharzen, oder wässrige 2K-Lacke, beispielsweise solche auf Basis von hydroxylgruppenhaltigen Polyacrylatoder Polyesterharzen mit Melaminharzen oder gegebenenfalls blockierten Polyisocyanatharzen als Vernetzer. In gleicher Weise seien auch Polyepoxidharzsysteme genannt.

Darüber hinaus sind die erfindungsgemäß beanspruchten Dispergiermittel nach Verwendung zur Herstellunng von Pigmentpasten mit dem gesamten Spektrum an dispersionsbasierten Bindemitteln wie z.B. Reinacrylatdispersionen, Styrolacrylatdispersionen, Alkydharzemulsionen und PU-modifizerten Varianten, Terpolymerisaten auf Basis von Polyvinylacetat und Hybriddispersionen (z.B. Alkyd-Acrylat-Blend) auflackbar.

Wasser ist das bevorzugte Lösemittel für die erfindungsgemäß einzusetzenden Copolymere. Aber auch organische Lösemittel wie beispielsweise Glycolether oder -ester können allein oder im Gemisch mit Wasser verwendet werden. Insbesondere für das Antrocknungsverhalten der mittels der erfindungsgemäßen Copolymere hergestellten Pigmentpasten ist der Zusatz von Lösemitteln gegebenenfalls vorteilhaft.

Zur Herstellung der erfindungsgemäßen Pigmentpasten kann zudem auch der Zusatz weiterer nichterfindungsgemäßer, wasserdispergierbarer Polymere wie beispielsweise von Polyacrylat-, Polyurethan- oder Polysiloxanderivaten erfolgen.

Bei der Herstellung der erfindungsgemäßen Pigmentkonzentrate können zudem weitere Hilfsmittel wie Entschäumer, Konservierungshilfsmittel, Netzmittel, Entlüfter oder dem Stand der Technik entsprechende Anti-Settling-Mittel, Wachse oder Rheologieadditive Verwendung finden.

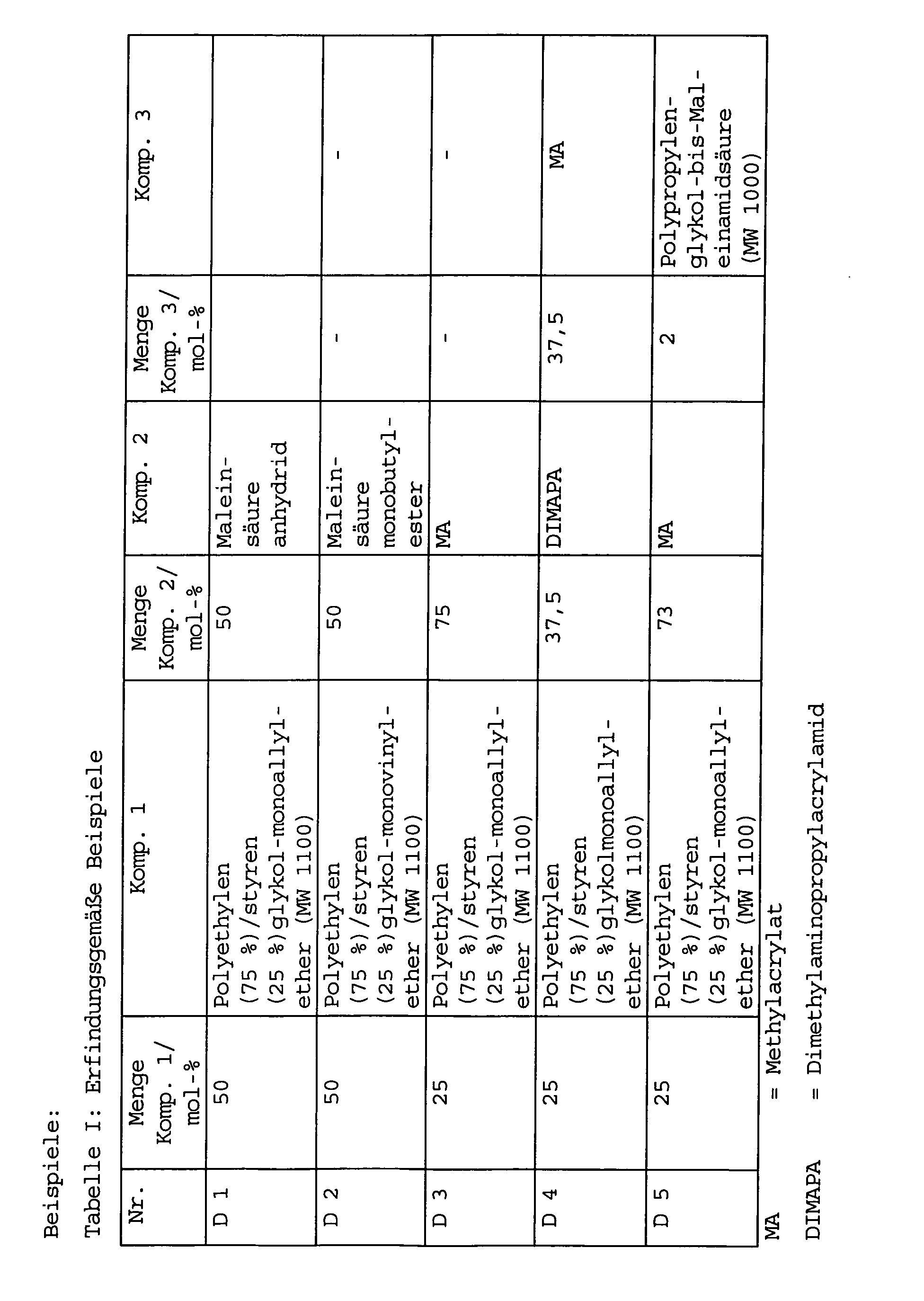

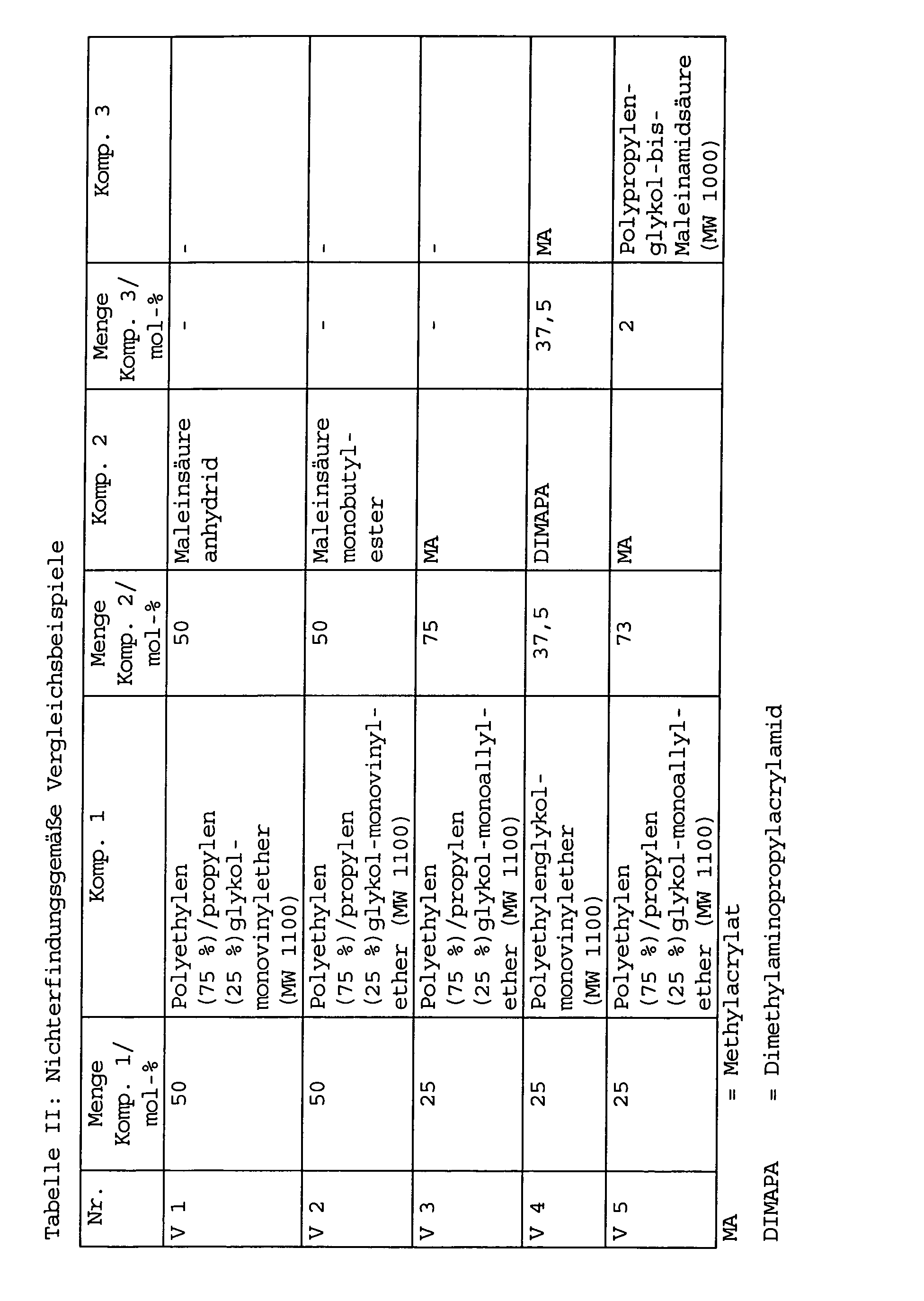

### Herstellungsbeispiel für D1:

In einem Reaktionsgefäß mit Thermometer, Rührer, Rückflusskühler und zwei Anschlüssen für separate Zuläufe wurden 270 g Wasser vorgelegt. Unter Rühren wurden 32,7 g Maleinsäureanhydrid und 25,0 g 50 %ige wässrige Natronlauge zugesetzt, wobei die Temperatur durch Kühlen unter 30 °C gehalten wurde. Anschließend wurden 100 mg Eisensulfat-Heptahydrat sowie 18,5 g 30 %iges Wasserstoffperoxid unter Rühren zugegeben und aus separaten Zulaufgefäßen eine Lösung aus 5,1 g Natriumhydroxymethansulfinat-Dihydrat und 12,5 g Wasser (Zulauf 1) einerseits über 75 Minuten und eine Lösung aus 155 g Poly(ethylenglykol-b-styroloxid)-monovinylether zugegeben.

Nach beendeter Zugabe wurde noch 30 Minuten bei 35 °C gerührt und das Reaktionsgemisch auf 25 °C abgekühlt. Durch Zugabe von 20 %iger wässriger Natronlauge wurde ein pH-Wert von 7,6 eingestellt. Es wurde eine gelb gefärbte, leicht trübe wässrige Zubereitung erhalten, die einen Feststoffgehalt von 37,4 Gew.-% aufwies.

Die Herstellung der Beispiele D2, V1 und V2 erfolgt in analoger Weise unter Verwendung der in den Tabellen I und II angegebenen Monomerbausteine und Gewichtsteile.

### Herstellungsbeispiel D3:

In einem Reaktionsgefäß mit Thermometer, Rührer, Rückflusskühler und zwei Anschlüssen für separate Zuläufe wurden 192 g Poly(ethylenglykol-b-styroloxid)-monoallylether vorgelegt und auf 100 °C erwärmt. Unter Rühren wurde separat 47,7 g Methylacrylat und 3,6 g AMBN (2,2'-Azobis(2-methylbutyronitrile)) während 2 Stunden zugesetzt, wobei die Temperatur bei 100 °C gehalten wurde. Eine Nachpolymerisationszeit von 2 Stunden wurde eingehalten. Es wurde ein leicht gelblich gefärbtes 100 %iges Produkt erhalten.

Die Herstellung der Beispiele D4, D5, V3, V4 und V5 erfolgte in analoger Weise.

Die erfindungsgemäßen Beispiele sind in Tabelle I benannt, wobei die aufgeführten Beispiele keine Einschränkung der Patentansprüche darstellen, sondern nur der Veranschaulichung dienen. In Tabelle II sind die nichterfindungsgemäßen Vergleichsbeispiele benannt.

Die vorgenannten erfindungsgemäßen Verbindungen werden zur Herstellung von Pigmentpasten verwendet und diese anschließend zum Einfärben von verschiedenen Lacken eingesetzt.

Die dem Patent zugrunde liegenden erfindungsgemäßen Verbindungen wurden ebenso wie die nichterfindungsgemäßen wegen der Vergleichbarkeit und einfacher Einarbeitung auf eine gut dosierbare Konzentration von 40 % Polymer in H₂O gebracht und die Lösungen anschließend auf einen pH-Wert von 8,0 mit Amin eingestellt.

Dabei können die erfindungsgemäßen Verbindungen als Netz- und Dispergieradditive besonders für bindemittelfreie aber auch für bindemittelhaltige Pigmentpasten eingesetzt werden.

Wässrige Pigmentformulierungen, können üblicherweise enthalten:
- 0,5 bis 50 Gew.-T.: mindestens eine der erfindungsgemäßen Verbindungen,
- 0 bis 20 Gew.-T.: Anreibeharz (dispersing resin),
- 5 bis 80 Gew.-T.: Pigment,
- 0,1 bis 5 Gew.-T.: üblicher Hilfs- und Zusatzstoffe (Entschäumer, Biozide, Antiabsetzmittel, Neutralisationsmittel, Verdicker, Feuchthaltemittel, Stabilisatoren, Sikkative, Lichtschutzmittel)
- 0 bis 30 Gew.-T.: Lösemittel
- ad 100 Gew.-T.: Wasser.

Sie können auch mit bis zu dem 1000-fachen Gew.-T. an Klarlack aufgelackt bzw. in einen Weißlack zur Farbtoneinstellung (Tinting) gegeben werden.

In wässrigen Pastensystemen ist die Wahl des Netz- und Dispergieradditivs abhängig vom verwendeten Pigment und dem Lacksystem, in dem die Paste verarbeitet wird. Weiterhin gibt es neben lösungsmittelfreien auch glykolhaltige Pasten.

Natürlich dürfen Additive im Lackfilm nicht zu Trübungen oder Glanzverlust führen.

Oft wird die Löslichkeit des Additivs in einer hochkonzentrierten Bindemittellösung als Kriterium für die Verträglichkeit herangezogen. Eine schwache Trübung des Additivs im Bindemittel kann aber auf die Haftgruppen zurückzuführen sein oder sogar die Neigung des Additives signalisieren mit dem Hydrophobanteil aus der wässrigen Umgebung an eine hydrophobe Pigmentoberfläche zu migrieren, so dass im pigmentierten Lack in der Praxis trotzdem hochglänzende trübungsfreie Beschichtungen erhalten werden können.

Üblicherweise führt der Fachmann zur Übersicht folgende Versuche durch: Zu 50 g Bindemittellösung gibt man 1 g, 5 g bzw. 10 g Dispergiermittel, womit man den unterschiedlichen Bedarf von oxidischen und organischen Pigmenten an Dispergiermittel berücksichtigt und betrachtet die Trübungs- oder auch Koagulationsneigung (z.B. bei Dispersionen) in einem Glas. Durch anschließendes Applizieren auf transparente Folie und farbmetrische Vermessung über einer genormten Schwarztafel kann diese Eigenschaft quantifiziert werden.

### Rub-out-Test:

Um insbesondere das vertikale Ausschwimmen von Pigmenten in Lackfilmen sichtbar und meßbar zu machen, kann man den sogenannten Rub-out-Test durchführen. Dazu reibt man den noch feuchten, aber bereits angezogenen Lackfilm mit dem Finger oder einem Pinsel. Haben sich die Pigmente entmischt oder liegen sie stark flockuliert vor, so wird durch den mechanischen Vorgang des Reibens wieder eine homogene Verteilung erzwungen. Es entsteht der angestrebte Farbton des homogenen Gemisches. An der Farbdifferenz zum ungeriebenen Film erkennt man das Ausmaß der Störung. Man kann sowohl einen positiven als auch einen negativen Rub-out-Effekt erhalten. Ein positiver Rub-out-Effekt bedeutet, dass die Farbstärke des ungeriebenen Films niedriger als die des geriebenen Films ist, was z. B. auf das Aufschwimmen von Weißpigment zurückzuführen sein kann. Bei einem negativen Rub-out-Effekt ist es umgekehrt.

### Ablauftest:

Zur Bewertung von deflockulierenden oder schwach flockulierenden Additiven eignet sich ein Ablauf oder Aufzug auf einer transparenten Folie. Die Qualität verschiedener Dispergieradditive lässt sich mit Kriterien wie Glanz, Glanzschleier und ggf. Transparenz bewerten.

### Lagerstabilität:

Von den hergestellten Pigmentpasten werden je 100 ml Probe in eine Glasflasche abgefüllt, um nach 1, 3 und 6 Monaten an unberührten Proben die Bodensatz- und Serumbildung zu beurteilen. Nach dem entsprechenden Ruhezeitraum wird die Paste betrachtet und die über der Paste stehende Menge Serum in Millimetern angegeben. Mit einem Spatel wird vorsichtig über den Boden der Paste gezogen und die daran verbleibende Menge Bodensatz mit "kein, wenig oder viel" deklariert.

### Viskositätsbestimmung:

Neben den coloristischen Parametern ist die Bestimmung der Viskosität der resultierenden Pigmentpasten ein wichtiges Kriterium, um die Benetzung der entsprechenden Pigmentoberfläche zu beurteilen. Dazu werden verschiedene Arten von Viskosimetern eingesetzt. Darüber hinaus kann die Konstanz der Viskosität nach 1, 3 und 6 Monaten dazu dienen, die Permanenz der Pigment-Dispergiermittel-Wechselwirkung zu charakterisieren und somit die Lagerstabilität der Pasten zu garantieren.

Übliche Viskositätsprofile, die erfasst werden, sind z.B. von 100 bis 1.000 mPas in 100 mPas Schritten in 180 s oder von 100 bis 1.000 mPas mit Pause bei 100 mPas (60 s halten) mit Anstieg um 100 mPas bis 1.000 mPas (60 s halten) und zurück auf 100 mPas. Zur Erfassung werden verschiedene Viskosimeter eingesetzt, wie z.B. Europhysics, RHEO 2000.

### Bestimmung der farbmetrischen Werte:

Die auf Kartonkarten (Leneta® -Karte) aufgezogenen pigmentierten Lacke und Farben werden mittels eines Farbmessgerätes (Typ X-Rite, SP 62-162, Lichtart D65/10, Firma X-Rite) in Form von L*a*b*-Werten (Helligkeit, Farbstich auf der Rot/Grün-Skala, Farbstich auf der Gelb/Blau-Skala) bestimmt.

Zur Herstellung wässriger Pigmentpasten werden 0,5 bis 50,0 Gewichtsteile der neutralisierten, speziell modifizierten Copolymere auf Basis von vinylfunktionalisierten und styroloxidbasierten Polyethern verwendet, vorzugsweise 1,0 bis 40,0 Gewichtsteile, bezogen auf die 100 %igen Polymeren.

Falls die Derivate z.B. resultierend aus einer Substanzpolymerisation nicht flüssig sind, empfiehlt sich die vorherige Herstellung einer 40 bis 50 %igen Lösung, da bei der erfindungsgemäßen Verwendung derartiger Verbindungen ohnehin H₂O vorgelegt wird und dann die entsprechenden Pigmente und Füllstoffe eingearbeitet werden, wobei dies auch eventuelle Zusätze von glykolhaltigen Lösemitteln mit 0 bis 30,0 Gewichtsteilen, vorzugsweise mit 0 bis 10,0 Gewichtsteilen einschließt.

Prinzipiell können die erfindungsgemäß beanspruchten Dispergiermittel auch gleichzeitig mit dem Pigment bzw. Füllstoff in das Dispergiermedium eingetragen werden bzw. vorab mit diesem vermischt werden. Der kombinierte Einsatz der erfindungsgemäß beanspruchten Verbindungen mit weiteren bereits bekannten Dispergiermitteln wird im Rahmen dieser Anmeldung natürlich eingeschlossen, weil der Fachmann ohnehin in der Weise arbeitet, um spezielle Eigenschaftsprofile zu erzielen.

### System 1:

### Formulierung der Farbpaste:

### Allgemeine Bedingungen:

| | |
|---|---|
| demineralisiertes Wasser | 20,1 |
| Dispergieradditiv, 40 % Feststoff wie oben beschrieben | 8,8 |
| Entschäumer Tego® Foamex 830 | 1,0 |
| Biocide Parmetol® K 40 | |
| (Fa. Schülke & Mayr) | 0,10 |
| Rühren bis homogen | |
| Titandioxid KRONOS® 2310 | 70,0 |
| (Fa. KRONOS International, Inc.) | |

Pigment einrühren, dann 1 h mit Glasperlen dispergieren (1 : 1 Volumen/z.B. mittels Schüttler Typ BA-S 20K der Fa. Lau GmbH).

### System 2:

### Formulierung der Farbpaste:

### Allgemeine Bedingungen:

| | |
|---|---|
| demineralisiertes Wasser | 47,8 |
| Dispergieradditiv, 40 % Feststoff wie oben beschrieben | 29,7 |
| Entschäumer Tego® Foamex 830 | 1,0 |
| Biocide Pazmetol® K 40 | |
| (Fa. Schülke & Mayr) | 0,10 |
| Rühren bis homogen | |
| Ruß Printex® 95 (Fa. Degussa) | 20,0 |

Pigment einrühren, dann 2 h mit Glasperlen dispergieren (1 : 2 Volumen/z.B. mittels Schüttler Typ BA-S 20K der Fa. Lau GmbH).

### System 3:

### Formulierung der Farbpaste:

### Allgemeine Bedingungen:

| | |
|---|---|
| demineralisiertes Wasser | 28,9 |
| Dispergieradditiv, 40 % Feststoff wie oben beschrieben | 35,0 |
| Entschäumer Tego® Foamex 830 | 1,0 |
| Biocide Parmetol® K 40 | |
| (Fa. Schülke & Mayr) | 0,10 |
| Rühren bis homogen | |
| Phthalocyanin Heliogenblau® L 7101 F | 35,0 |
| (Fa. BASF AG) | |

Pigment einrühren, dann 2 h mit Glasperlen dispergieren (1 : 2 Volumen/z.B. mittels Schüttler Typ BA-S 20K der Fa. Lau GmbH).

### System 4:

### Formulierung der Farbpaste:

### Allgemeine Bedingungen:

| | |
|---|---|
| demineralisiertes Wasser | 13,9 |
| Dispergieradditiv, 40 % Feststoff wie oben beschrieben | 19,5 |
| Entschäumer Tego® Foamex 830 | 1,0 |
| Biocide Parmetol® K 40 | |
| (Fa. Schülke & Mayr) | 0,10 |
| Rühren bis homogen | |
| Eisenoxidrot Bayferrox® 120 M | |
| (Fa. Bayer AG) | 65,0 |

Pigment einrühren, dann 1 h mit Glasperlen dispergieren (1 : 1 Volumen/z.B. mittels Schüttler Typ BA-S 20K der Fa. Lau GmbH).

Diese auf Basis der erfindungsgemäßen und nichterfindungsgemäßen Verbindungen hergestellten Pasten basierend auf dem System 1 werden entsprechend dem in der Lackindustrie üblichen sogenannten Fullmixing zusammen mit einer Standardrußpaste in einem Klarlack auf Basis einer Acrylatdispersion (NeoCryl® XK 90, Fa. Zeneca) in den folgenden Verhältnissen gemischt. Auf 10 g Klarlack werden je 3,55 g TiO₂-Paste gegeben und 0,30 g Rußpaste zugemischt.

Die genannten Mischungen werden anschließend bei 1.500 Upm homogenisiert. Der dazu verwendete Klarlack I ist der unten stehenden Formulierung zu entnehmen.

### Formulierung des Klarlackes I:

| | |
|---|---|
| Verdicker Rheolate® 278 (Fa. Rheox) | 5,2 |
| Lösemittel Butylglykol | 4,2 |
| Lösemittel Methoxybutanol | 4,5 |
| Bindemittel NeoCryl® XK 90 | |
| (Fa. NeoResins) | 77,5 |
| demineralisiertes Wasser | 8,6 |
| | 100,0 |

Zusätzlich können Buntpasten resultierend aus der Verwendung der erfindungsgemäßen und nichterfindungsgemäßen Verbindungen (System 2, 3 und 4) in einem Weißlack I oder einem Weißlack II auf Basis von Acrylatdispersionen zum Tinting eingesetzt werden, die den folgenden Formulierungen zu entnehmen sind.

### Formulierung des Weißlackes I:

| | |
|---|---|
| Lösemittel Propylenglykol | 2,3 |
| demineralisiertes Wasser | 3,0 |
| Neutralisationsmittel AMP-90® | |
| (Fa. Angus) | 0,2 |
| Entschäumer Tego® Foamex 805 | 0,2 |
| Netzmittel Surfynol® 104 E | |
| (Fa. Air Products) | 0,4 |
| Anreibeharz NeoCryl® BT 24 | |
| (Fa. NeoResins) | 2,9 |
| Titandioxid KRONOS® 2310 | |
| (Fa. KRONOS International, Inc.) | 21,4 |

20 min bei 6.000 Upm mit Dispermat z.B. der Fa. VMA Getzmann in einen 1.000 ml Edelstahltopf mit einer Dissolverscheibe d = 60 mm dispergieren und dann folgende Rezepturbestandteile zugeben:

| | |
|---|---|
| Verdicker Rheolate® 278 (Fa. Rheox) | 3,6 |
| Lösemittel Butylglykol | 2,9 |
| Lösemittel Methoxybutanol | 3,1 |
| Bindemittel NeoCryl® XK 90 | |
| (Fa. NeoResins) | 54,0 |
| Entschäumer Tego® Foamex 805 | 0,4 |
| demineralisiertes Wasser | 5,6 |
| | 100,0 |

### Formulierung des Weißlackes II:

| | |
|---|---|
| Lösemittel Propylenglykol | 30,5 |
| demineralisiertes Wasser | 32,5 |
| Acrylatbasiertes Dispergiermittel, | |
| NaOH neutralisiert | |
| (OROTAN® 731 (25 % Lsg.)) | 8,3 |
| Entschäumer Byk 019 | 2,0 |
| Titandioxid KRONOS® 2310 | |
| (Fa. KRONOS® International, Inc.) | 205,0 |

20 min bei 6.000 Upm mit Dispermat z.B. der Fa. VMA Getzmann in einen 1.000 ml Edelstahltopf mit einer Dissolverscheibe d = 60 mm dispergieren und folgende Rezepturbestandteile anschließend zugeben:

| | |
|---|---|
| Bindemittel Primal® HG 98 D | |
| (Fa. Rohm & Haas) | 590,0 |
| Netzmittel Rhodafac® RS-410 | 4,5 |
| Lösemittel Dowanol DPnB | 21,0 |
| deminesralisiertes Wasser | 24,0 |
| Verdicker Acrysol® RM 2020 | |
| (Fa. Rohm & Haas) | 24,0 |
| Entschäumer Byk 024 | 3,0 |
| demineralisiertes Wasser | 55,2 |
| | 1.000,0 |

Weiterhin werden die Weißpasten auf Basis der erfindungsgemäßen und nichterfindungsgemäßen Verbindungen (System 1) in einen Klarlack II auf Basis einer Alkydharzdispersion (Uradil® XP 5562 AZ) gemäß der unten stehenden Formulierung eingearbeitet.

### Formulierung des Klarlackes II:

| | |
|---|---|
| demineralisiertes Wasser | 11,45 |
| Bindemittel Uradil® XP 5560 AZ | |
| (Fa. DSM) | 80,00 |
| Verdicker Acrysol® RM 8 | |
| (Fa. Rohm & Haas) | 1,00 |
| Verdicker Acrysol® RM 2020 | |
| (Fa.Rohm & Haas) | 4,40 |
| Sikkativ Additol® VXW 4940 | |
| (Fa. Vianova) | 0,70 |
| Netzmittel Tego® Wet 280 | 0,45 |
| Lösemittel Propylenglykol | 2,00 |
| | 100,0 |

Darüber hinaus werden die Farbpasten (System 2 und 3) auf Basis der erfindungsgemäßen und nicht erfindungsgemäßen Verbindungen in einen weißen Zweikomponentenlack III (Acrylat/Isocyanat, Bayhydrol® VPLS 2235/1 und Bayhydur® VPLS 2319/80, Fa. Bayer AG) in die unten stehende Formulierung eingebracht.

### Formulierung des Weißlackes III:

| | |
|---|---|
| Bindemittel Bayhydrol® VPLS 2235/1 | |
| (Fa. Bayer) | 41,00 |
| Netzmittel Surfynol® 104E | |
| (Fa. Air Products) | 1,00 |
| Titandioxid KRONOS® 2310 | |
| (Fa. KRONOS International, Inc.) | 35,00 |
| Bindemittel Bayhydrol® VPLS 2235/1 | |
| (Fa. Bayer) | 16,50 |
| Verdicker Acrysol® RM 8, | |
| 20 %ig in EtOH | |
| (Fa.Rohm & Haas) | 0,60 |
| demineralisiertes Wasser | 5,90 |
| | 100,0 |

Die Vernetzung des Acrylates erfolgt durch Mischen von 100 Gewichtsteilen Weißlack mit 22 Gewichtsteilen Isocyanatkomponente. 10 g der vorgenannten Bindemittel-Härter-Mischung werden entweder mit 0,49 g Rußpaste (System 2) oder 0,28 g Phthalocyaninpaste (System 3) homogenisiert (5 min bei 1.500 Upm mischen) und nach Trocknung über Nacht die entsprechenden Parameter bestimmt.

### Ergebnisse:

### Farbmetrische Ergebnisse und Glanzbeurteilung:

**Tabelle III:**

| System 3 mit Weißlack I: | | | | | |
|---|---|---|---|---|---|
| | Helligkeit L* | a* | b* | Rub-Out ΔE | Glanz 20 ° |
| D 1 | 64,69 | -21,74 | -35,00 | 1,67 | 40,2 |
| D 2 | 63,00 | -21,62 | -35,76 | 1,62 | 37,1 |
| D 3 | 61,25 | -21,21 | -36,70 | 1,92 | 36,6 |
| D 4 | 62,59 | -21,42 | -35,92 | 1,49 | 37,4 |
| D 5 | 62,43 | -21,31 | -36,07 | 1,28 | 36,1 |
| V 1 | 79,79 | -15,43 | -18,93 | 14,67 | 18,7 |
| V 2 | 64,80 | -21,61 | -35,14 | 1,45 | 33,6 |
| V 3 | 65,99 | -19,97 | -32,21 | 1,56 | 32,8 |
| V 4 | 73,02 | -16,02 | -22,99 | 12,75 | 18,4 |
| V 5 | 68,57 | -17,35 | -29,67 | 2,87 | 27,3 |

Aus der oben stehenden Tabelle wird deutlich, dass die erfindungsgemäßen Verbindungen die Herstellung von Phthalocyaninpasten mit hoher Stabilität garantieren, denn im gezeigten Tinting resultieren Farben mit hoher Farbstärke (niedriger L*-Wert und besonders negative b*-Werte), niedrigen Rub-outs und hohem Glanz.

**Tabelle IV:**

| System 3 mit Weißlack II: | | | |
|---|---|---|---|
| | Helligkeit L* | Rub-Out ΔE | Glanz 20 ° |
| D 1 | 64,84 | 0,69 | 54,3 |
| D 2 | 64,20 | 0,67 | 56,0 |
| D 3 | 64,99 | 0,39 | 53,5 |
| D 4 | 64,73 | 0,48 | 48,5 |
| D 5 | 64,95 | 0,43 | 49,3 |
| V 1 | 69,50 | 8,82 | 18,9 |
| V 2 | 65,39 | 0,52 | 46,0 |
| V 3 | 67,00 | 2,66 | 45,5 |
| V 4 | 79,43 | 16,04 | 19,3 |
| V 5 | 71,18 | 3,64 | 40,1 |

Auch in dem Weißlack II sind durch die Verwendung der erfindungsgemäßen Verbindungen für die Herstellung der Phthalocyaninpasten Tintings möglich, die die Effizienz gegenüber den nichterfindungsgemäßen Verbindungen anhand von Farbtiefeentwicklung und geringen Rub-outs verdeutlichen. In besonderer Weise ist dabei die Tatsache hervorzuheben, dass die erfindungsgemäßen Verbindungen die Herstellung hochglänzender Dispersionslacke auf Acrylatbasis erlauben.

**Tabelle V:**

| System 2 in Weißlack II: | | | | | |
|---|---|---|---|---|---|
| | Helligkeit L* | a* | b* | Rub-Out ΔE | Glanz 20 ° |
| D 1 | 49,52 | -0,72 | -2,52 | 0,27 | 58,9 |
| D 2 | 48,76 | -0,75 | -2,43 | 0,45 | 60,6 |
| D 4 | 49,62 | -0,73 | -2,37 | 0,04 | 60,1 |
| V 1 | 66,62 | -1,70 | -6,08 | 12,69 | 39,9 |
| V 2 | 52,88 | -0,78 | -2,37 | 0,82 | 55,3 |
| V 4 | 65,54 | -1,63 | -6,02 | 14,77 | 48,0 |

Die erfindungsgemäßen Verbindungen sind, wie aus obiger Tabelle ersichtlich wird, dazu geeignet auch feinteilige Ruße so wirksam zu benetzen, dass beim Tinting in Weißlacken hohe Farbstärkeentwicklung (niedrige L*-Werte in Kombination mit möglichst geringfügigen negativen b*-Werten) garantiert wird. Derartig feinteilige Pigmente (Primärteilchen = 15 nm) brauchen häufig hohe Mengen an Surfactant, um ohne Glanzreduktion in dispersionsbasierten hochglänzenden Formulierungen tintbar zu sein. Die erfindungsgemäßen Verbindungen weisen eine derartige Limitierung nicht auf.

**Tabelle VI:**

| System 4 in Weißlack II: | | | | |
|---|---|---|---|---|
| | Helligkeit L* | a* | b* | Rub-Out ΔE |
| D 3 | 63,37 | 22,53 | 10,24 | 0,38 |
| D 4 | 63,00 | 22,82 | 10,53 | 0,36 |
| V 3 | 64,44 | 22,03 | 9,63 | 0,63 |
| V 4 | 64,33 | 21,83 | 9,27 | 0,49 |

Die Leistungsfähigkeit der erfindungsgemäßen Verbindungen wird in der oben stehenden Tabelle neben der guten Farbtiefeentwicklung in Form niedriger L*-Werte anhand des starken Gelbstichs in Rot deutlich (b*-Werte), denn dieser dokumentiert die effiziente Stabilisierung des feinteiligen Bayferrox-Typs. Daher resultieren auch die besseren Rub-out-Werte für die erfindungsgemäßen Verbindungen.

**Tabelle VII:**

| System 1 in Klarlack II: | | |
|---|---|---|
| | 20 °-Glanz | 60 °-Glanz |
| D 2 | 82,4 | 93,7 |
| D 3 | 85,3 | 93,9 |
| V 2 | 80,3 | 91,7 |
| V 3 | 79,7 | 91,2 |

Die erfindungsgemäßen Verbindungen zeigen beim Einbringen der auf ihnen basierenden Titandioxidpasten in einen Hochglanzacryalklarlack eine hervorragende Verträglichkeit, die sich in hohen Glanzgraden des resultierenden weißen Alkydharzlackes äußert. Das heißt die erfindungsgemäßen Verbindungen lassen eine hohe Feinteiligkeit des Weißpigmentes von ≦ 10 µm zu.

**Tabelle VIII:**

| System 2 in Weißlack III: | | | | |
|---|---|---|---|---|
| | Helligkeit L* | a* | b* | Rub-Out ΔE |
| D 1 | 52,57 | -0,75 | -2,47 | 0,48 |
| D 2 | 53,17 | -0,77 | -2,46 | 0,37 |
| D 3 | 51,37 | -0,73 | -2,43 | 0,28 |
| D 4 | 53,05 | -0,77 | -2,34 | 0,26 |
| D 5 | 52,72 | -0,71 | -2,39 | 0,40 |
| V 1 | 61,02 | -1,08 | -3,41 | 5,08 |
| V 2 | 55,16 | -0,76 | -2,35 | 1,09 |
| V 3 | 54,09 | -0,78 | -2,58 | 0,63 |
| V 4 | 66,17 | -1,59 | -5,98 | 14,77 |
| V 5 | 57,29 | -0,89 | -3,72 | 2,45 |

Die erfindungsgemäßen Verbindungen erlauben die Herstellung von Rußpasten, die sich bei der Einarbeitung in den 2K-PUR-Weißlack durch hohe Farbtiefeentwicklung mit niedrigsten Rubout-Werten auszeichnen.

**Tabelle IX:**

| System 3 in Weißlack III: | | | | |
|---|---|---|---|---|
| | Helligkeit L* | a* | b* | Rub-Out ΔE |
| D 1 | 67,09 | -22,04 | -33,66 | 0,99 |
| D 2 | 66,06 | -22,22 | -34,28 | 0,27 |
| D 3 | 66,59 | -22,08 | -34,02 | 0,87 |
| D 4 | 67,06 | -21,81 | -33,18 | 0,78 |
| D 5 | 66,89 | -21,93 | -33,89 | 0,52 |
| V 1 | 83,96 | -10,82 | -13,32 | 1,85 |
| V 2 | 67,82 | -20,99 | -30,42 | 0,87 |
| V 3 | 69,02 | -20,17 | -30,75 | 3,50 |
| V 4 | 81,58 | -12,16 | -15,84 | 2,26 |
| V 5 | 71,29 | -18,77 | -29,51 | 2,08 |

Wie die oben stehende Tabelle zeigt, bieten die erfindungsgemäßen Verbindungen die Möglichkeit Phthalocyaninpasten herzustellen, die beim Tinting in dem 2K-PUR-Weißlack die Herstellung besonders farbtiefer Lacke (niedrige L*-Werte) ohne signifikante Ausschwimmneigung der Pigmente (niedrige Rub-out-Werte) gestatten.

### Fazit:

Die vorhergehenden Vergleiche zeichnen die erfindungsgemäßen Verbindungen mit Styroloxid als wesentlichem Strukturbestandteil in den Polyetherbausteinen der Polymeren am Beispiel von D1 bis D5 (jedoch nicht ausschließlich darauf begrenzt) hinsichtlich ihrer universellen Anwendbarkeit auf verschiedenartigen Pigmentoberflächen (organische Pigmente, Ruße und oxidische, anorganische Pigmente) aus. Dabei ist die Verwendung von polymerisierbaren, also z.B. vinylfunktionellen oder allylfunktionellen Polyethern in Kombination mit Dicarbonsäurederivaten, wie z.B. mit MSA-Monobutylester, in einer wässrigen Polymerisation besonders bevorteilt. Weiterhin können oben beschriebene polymerisierbare styroloxidbasierte Polyoxyalkylene auch in lösemittelfreier Substanzpolymerisation unter Verwendung acrylfunktioneller Monomere wie z.B. Methacrylat oder besonders bevorzugt von aminofunktionellen Acrylatbausteinen wie z.B. DIMAPA, zu höchst wirksamen, den Glanz stabilisierenden Dispergier- und Netzmittel formuliert werden.

## Patentansprüche

1. Verwendung von Copolymeren auf Basis von polymerisierbaren styroloxydbasierten Oxyalkylenglykol- oder Polyalkylenoxidethern und ungesättigten Carbonsäure und/oder Dicarbonsäure-Derivaten als Dispergieradditive in Lacken, Farben und Druckfarben zur Herstellung wässriger Pigmentkonzentrate bestehend aus:
A) 1 bis 80 mol-% mindestens eine der Baugruppen der Formel Ia, Ib, Ic und/oder Id 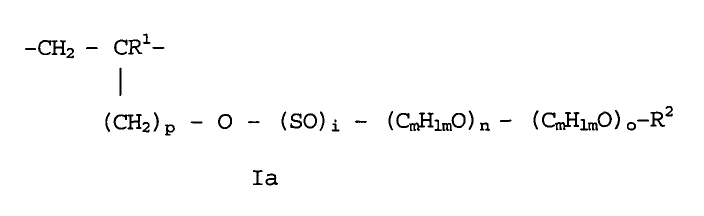 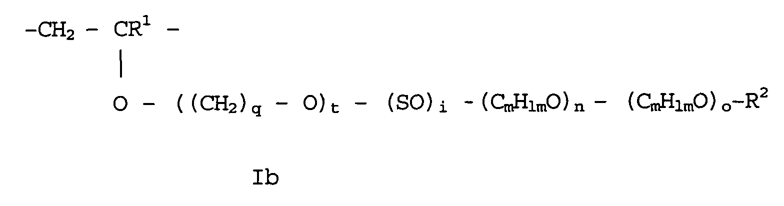 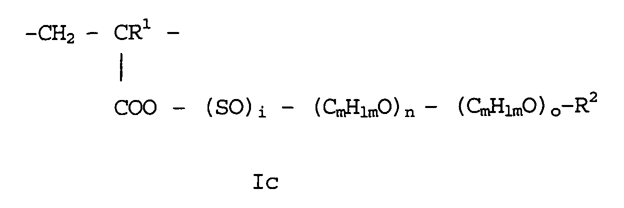 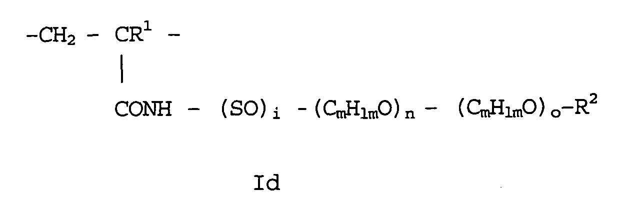 worin
R¹ = H, aliphatischer Kohlenwasserstoffrest mit 1 bis 5 C-Atomen,
p = 1 bis 4,
q = 0 bis 6,
t = 0 bis 4,
i = 1 bis 6,
l = 2 oder 1 wenn (CₘHₗₘO)ₒ = SO ist,
m = unabhängig 2 bis 18
sind,
wobei der Index am H-Atom durch das Produkt aus 1 und m gebildet wird,
n = 0 bis 100,
o = 0 bis 100,
worin die Summe (n + o) > 0 ist,
SO = Styroloxid
wobei
(SO) ᵢ und die Alkylenoxidderivate statistisch oder blockartig im Polyether verteilt sein können, bevorzugterweise liegen die Gruppen aber blockartig aufgebaut und in der Reihenfolge
- (SO)ᵢ - [ (CₘHₗₘO)ₙ- (CₘHₗₘO)ₒ] - R² vor.
R² = ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen, der gegebenenfalls substituiert ist oder ein Phosphorsäureester-, vorzugsweise Monoester, Sulfatoder Sulfonatderivat und vorzugsweise H sein kann, und
B) 1 bis 90 mol-% Baugruppen der Formel II 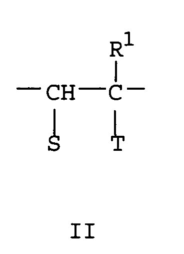 wobei
S = -H, -COOMₐ, -COOR³ bedeutet,
wobei
M = Wasserstoff, ein- oder zweiwertiges Metallkation, Ammoniumion, organischer Aminrest,
a = 1 oder für den Fall, dass M ein zweiwertiges Metallkation ½ ist,
R³ = ein aliphatischer, gegebenenfalls verzweigter Kohlenwasserstoffrest mit 1 bis 20 C-Atomen, ein cycloaliphatischer Kohlenwasserstoff mit 5 bis 8 C-Atomen, ein Arylrest mit 6 bis 14 C-Atomen ist,
T = -U¹-R⁴ oder -U¹- (CₘHₗₘO)ₙ - (CₘHₗₘO)ₒ-R²,
U¹ = -COO-, -CONH-, -CONR³-, -O-, -CH₂O-,
R⁴ = H, Mₐ, R³ oder -Q¹-NQ²Q³ ist,
wobei
Q¹ ein zweiwertiger Alkylenrest mit 2 bis 24 Kohlenstoffatomen,
Q² und Q³ - aliphatische und/oder alicyclische Alkylreste mit 1 bis 12 Kohlenstoffatomen sind, gegebenenfalls oxidiert zu -Q¹- N ⁽⁺⁾ O⁽⁻⁾ Q²Q³
und
m, n, l, o, R¹ und R² die oben genannte Bedeutung aufweisen, und
C) 0 bis 10 mol-% Baugruppen der Formel III 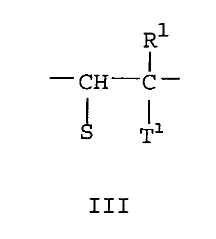 wobei
T¹ = -U¹-(CₘHₗₘO)ₙ-(CₘHₗₘO)ₒ-R⁵,
R⁵ = R⁴ oder 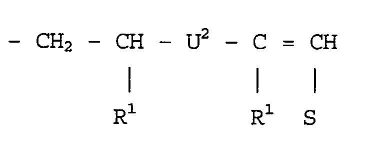
wobei
U² = - OOC -, - NHCO-, - O -, -CH₂O- ist,
wobei
m, n, l, o, S, R¹, R² und U¹ die oben genannte Bedeutung aufweisen.

2. Verwendung nach Anspruch 1, **dadurch gekennzeichnet, dass** zusätzlich bis zu 50 mol-%, insbesondere bis zu 20 mol-%, bezogen auf die Summe der Baugruppen A), B) und C) Baugruppen, deren Monomere sich von Vinyl-, Acrylsäureoder Methacrylsäurederivate ableiten, enthalten sind.

3. Verwendung nach Anspruch 1, zur Herstellung wässriger oder colöserhaltiger Pigmentkonzentrate, wobei man die Copolymere in Mengen von 0,1 bis 200 Gew.-%, bezogen auf das Pigment einsetzt.

4. Verwendung nach Anspruch 1, insbesondere **dadurch gekennzeichnet, dass** man Copolymere einsetzt, die aus 10 bis 60 mol-% Baugruppen Ia, Ib, Ic und/oder Id, 40 bis 90 mol-% Baugruppen der Formel II sowie 0 bis 2 mol-% Baugruppen der Formel III, bestehen.

5. Verwendung nach einem der Ansprüche 1 bis 4, **dadurch gekennzeichnet, dass** ein Teil der Baugruppen der Formel II aminoxidgruppenhaltige Dicarbonsäurederivate sind.

6. Verwendung nach einem der Ansprüche 1 bis 4, **dadurch gekennzeichnet, dass** ein Teil der Baugruppen der Formel II alkylalkohol- oder alkylamingruppenhaltige Dicarbonsäurederivate sind.

7. Verwendung nach einem der Ansprüche 1 bis 6, **dadurch gekennzeichnet, dass** man die Polymerisation in wässriger Lösung bei einer Temperatur von 20 bis 100 °C durchführt als auch in Anwesenheit von organischen Lösungsmitteln.

8. Verwendung nach einem der Ansprüche 1 bis 6, **dadurch gekennzeichnet, dass** man die Molekulargewichte der Polymere 1.000 bis 2.000.000, vorzugsweise 1.000 bis 50.000 betragen.

9. Verwendung nach einem der Ansprüche 1 bis 6 als Dispergieradditive für anorganische und organische Pigmente, insbesondere (transparente) Eisenoxide und Ruße oder zur Herstellung wässriger Pigmentkonzentrate mit diesen Pigmenten.

10. Verwendung nach einem der Ansprüche 1 bis 6 als Dispergieradditiv für organische Pigmente, die durch hohe Harzanteile auf der Oberfläche modifiziert sind.

11. Verwendung nach einem der Ansprüche 1 bis 6 als Dispergier- und Netzmittel von organischen Pigmentfilterkuchen zu deren Verflüssigung und/oder anschließender erneuter Aufkonzentration.
